# EUROPEAN PATENT SPECIFICATION

(11) **EP 0 472 741 B1**
(45) Date of publication and mention of the grant of the patent: **21.06.1995**
(21) Application number: 91906264.6
(22) Date of filing: 13.03.1991
(51) Int. Cl.: C08F 10/00, C08F 4/642, C08F 12/00

(54) **OLEFIN POLYMERIZATION CATALYST**
KATALYSATOR FÜR DIE OLEFINPOLYMERISATION
CATALYSEUR DE POLYMERISATION D'OLEFINE

(30) Priority: 16.03.1990 JP 64398/90; 16.03.1990 JP 64399/90
(43) Date of publication of application: 04.03.1992
(73) Proprietor: Tonen Corporation, Tokyo 100 (JP)
(72) Inventor: UEKI, Satoshi, Corporate Res. & Dev. Laboratory, Ooi-machi, Iruma-gun, Saitama 354 (JP); FURUHASHI, Hiroyuki, Corporate Res. & Dev. Lab., Ooi-machi, Iruma-gun, Saitama 354 (JP); MURATA, Masahide, Corporate Res. & Dev. Laboratory, Ooi-machi, Iruma-gun, Saitama 354 (JP); TOKI, Shigeyuki, Corporate Res. & Dev. Laboratory, Ooi-machi, Iruma-gun, Saitama 354 (JP)
(74) Representative: Baverstock, Michael George Douglas
(86) International application number: PCT/JP91/00345
(87) International publication number: WO 91/13917

(56) References cited:
- EP-A- 0 363 506
- JP-A- 4 864 174
- JP-A-61 130 313
- JP-A-61 151 202
- US-A- 3 073 811
- DATABASE CHEMICAL ABSTRACTS (HOST: STN), vol. 86, no. 8, abstract no. 44081g, Columbus, Ohio, US; P.M. NEDOREZOVA et al.: "Kinetics of polymerization of alpha- olefins on acetylacetonate derivatives of titanium and organoaluminum compounds"

## Description

This invention relates to an olefin polymerization catalyst.

An olefin polymerization catalyst consisting of a vanadium compound coordinated with three ligands such as a β-diketone and an organoaluminum compound, in combination, is well known.

Also a titanium compound or a zirconium compound each having two ligands coordinated therewith are known, but it has not been reported that such a compound has an ability to polymerize olefins.

The principal object of the present invention is to provide an olefin polymerization catalyst comprising, as a component, a transition metal compound having two ligands, such as β-diketones, coordinated therewith.

It has been discovered that the object of the present invention can be achieved by the combination of the transition metal compound with an organoaluminum compound, in particular, aluminoxane. The present invention is based on this discovery.

According to the present invention there is provided an olefin polymerization catalyst comprising:
(a) a transition metal compound represented by the general formula, 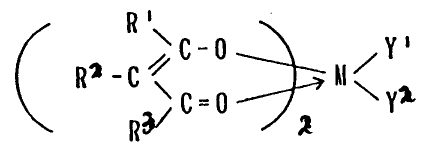 wherein M represents zirconium, Y¹ and Y² are the same or different, and each represents a halogen atom or an alkyl group containing from 1 to 10 carbon atoms and R¹, R² and R³ each represent a hydrogen atom or a hydrocarbon group containing from 1 to 10 carbon atoms, at least one of which is a hydrogen atom but not all of which are hydrogen atoms; and
(b) an organoaluminum compound which is an aluminoxane.

The catalyst of the present invention comprises the above described transition metal compound (a) and the organoaluminum compound (b).

The transition metal compound (a) (which will hereinafter be referred to as Compound (a)) is represented by the foregoing general formula.

In the general formula, M, Y¹, Y², R¹, R² and R³ are as defined above and M is zirconium.

When Y¹ and/or Y² represent halogen atoms, examples of the halogen atom are chlorine, bromine, iodine and fluorine, and chlorine is particularly preferred. When Y¹ and/or Y² represent alkyl groups, examples of the alkyl group are methyl, ethyl, propyl, isopropyl, butyl, isobutyl, sec-butyl, pentyl, hexyl, 2-ethylhexyl and octyl groups. It is particularly preferred that Y¹ and Y² are both halogen atoms.

When R¹, R² and/or R³ are hydrocarbon groups, examples of the hydrocarbon groups are alkyl groups, cycloalkyl groups, aryl groups and aralkyl groups, and the alkyl groups are preferred. The alkyl groups are selected from those exemplified for Y¹ and Y². Examples of the cycloalkyl groups are cyclopentyl, cyclohexyl and methylcyclohexyl groups. Examples of the aryl groups are phenyl, tolyl, xylyl and naphthyl groups. Examples of the aralkyl groups are benzyl, phenethyl and 3-phenylpropyl groups.

Examples of Compound (a) represented by the foregoing general formula will now be illustrated:
(i) When Y¹ and Y² are halogen atoms, R² is a hydrogen atom and R¹ and R³ are hydrocarbon groups:-
   - R¹/R³:: CH₃/CH₃, CH₃/C₂H₅, C₂H₅/C₂H₅, CH₃/C₆H₅, C₂H₅/C₆H₅, C₆H₅/C₆H₅ CH₃/C₆H₅CH₂, C₆H₅CH₂/C₆H₅ CH₂, C₂H₅/C₆H₅CH₂, C₆H₅/C₆H₅CH₂,
(ii) When Y¹ and Y² are halogen atoms, R² is a hydrocarbon group and one of R¹ and R³ is a hydrogen atom and the other is a hydrocarbon group:-
   - R²/R¹ or R³ :: CH₃/CH₃, C₂H₅/CH₃, CH₃/C₂H₅, C₂H₅/C₂H₅, C₆H₅/CH₃, CH₃/C₆H₅, C₆H₅/C₂H₅. C₂H₅/C₆H₅, C₆H₅/C₆H₅, C₆H₅CH₂/CH₃, CH₃/C₆H₅CH₂, C₆H₅CH₂/C₆H₅CH₂, C₆H₅CH₂/C₂H₅. C₂H₅/C₆H₅CH₂, C₆H₅CH₂/C₆H₅. C₆H₅/C₆H₅CH₂
(iii) When Y¹ and Y² are halogen atoms, R² is a hydrogen atom and one of R¹ and R³ is a hydrogen atom and the other is a hydrocarbon group:-
   R¹ or R³= CH₃, C₂H₅, C₆H₅, C₆H₅CH₂
Above all, the following compounds are preferred:-
bis(2-methyl-1,3-butanedionato)zirconium dichloride; bis(acetylacetonato)zirconium dichloride; and bis(1,3-butanedionato)zirconium dichloride.

Compound (a) can if desired be physically combined with one or more metal oxides. The metal oxides used herein are oxides of elements selected from Group II to IV elements of Periodic Table, illustrative of which are B₂O₃, MgO, Al₂O₃, SiO₂, CaO, TiO₂, ZnO, ZrO₂, SnO₂, BaO and ThO₂. Above all, B₂O₃, MgO, Al₂O₃, SiO₂, TiO₂, and ZrO₂ are preferred and Al₂O₃ and SiO₂ are particularly preferred. Composite oxides containing these metal oxides can also be used, such as SiO₂-MgO, SiO₂-Al₂O₃, SiO₂-TiO₂, SiO₂-V₂O₅, SiO₂-Cr₂O₃ and SiO₂-TiO₂-Mgo.

Preferably, the above described metal oxides and composite oxides are present in the form of anhydrides, but contamination thereof with such small amounts of hydroxides as are ordinarily present is acceptable.

The metal oxides should preferably be treated for removal of poisonous substances before use by calcining at as high a temperature as possible and out of direct contact with air.

The contacting of Compound (a) with the metal oxide is generally carried out in the presence of an inert hydrocarbon such as hexane, heptane, cyclohexane, benzene, toluene and xylene at a temperature of from room temperature to the boiling point of the hydrocarbon for 0.5 to 20 hours. The metal oxide is used in a proportion of 1 to 500 parts by weight to 1 part by weight of Compound (a).

Compound (a) can be prepared by any known method, for example, as described in Japanese Patent Publication No. 21010/1971.

As the organoaluminum compound (b) (which will hereinafter be referred to as Compound (b)), are used aluminoxanes.

The aluminoxanes are normally represented by the general formula 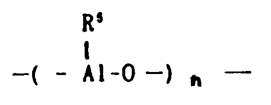
wherein R⁵ is a hydrocarbon group of C₁ to C₈, which can usually be prepared by reacting an organoaluminum compound represented by the general formula AlR⁵₃ with water or a compound having two or more hydroxyl groups.

Examples of this organoaluminum compound are trimethylaluminum, triethylaluminum, triisobutylaluminum, trihexylaluminum, trioctylaluminum and triphenylaluminum. Above all, trimethylaluminum is preferred.

As the water to be reacted with the organoaluminum compound, there may be used not only ordinary water but also water of crystallization, such as that from iron sulfate and copper sulfate. As the compound having two or more hydroxyl groups to be reacted with the organoaluminum compound, there may be used diol compounds having 2 to 16 carbon atoms and monosaccharides.

As the diol compound, ethylene glycol, propylene glycol, pinacol, 1,2-cyclohexane diol, 1,4-cyclohexane diol, catechol, resorcin and hydroquinone may be used and sorbitol, glucose, and erythritol may be used as the monosaccharide.

Compound (a) and Compound (b) may be used in a proportion of 1 to 10⁶ gram atoms, preferably 10 to 10⁵ gram atoms of Compound (b), as aluminum metal, to 1 mole of Compound (a).

The catalyst of the present invention can be used in the homopolymerization of olefins such as not only ethylene but also α-olefins, e.g. propylene, 1-butene, 1-hexene, 4-methyl-1-pentene and 1-octene, or copolymerization thereof with other olefins. In this specification, the term olefins is used to include styrene compounds.

For example, styrene compounds which may be polymerized by the catalyst of the present invention include styrene, α-methylstyrene, o-methylstyrene, m-methylstyrene, p-methylstyrene, o, m-dimethylstyrene, o-ethylstyrene, m-ethylstyrene, o-ethylstyrene, o-chlorostyrene and p-chlorostyrene.

The polymerization reaction can be carried out either in the gaseous phase or in the liquid phase. When the polymerization is carried out in the liquid phase, inert hydrocarbons such as n-butane, i-butane, n-pentane, i-pentane, hexane, heptane, octane, cyclohexane, benzene, toluene and xylene, or liquid monomers can be used. As the inert hydrocarbon, in particular, benzene, toluene and xylene can preferably be used. The polymerization temperature is ordinarily in the range of -80 to +150°C, preferably 40 to 120°C and the polymerization pressure is, for example, 1 to 60 atm (1 atm = 1.01 bar). Control of the molecular weight of the resulting polymer is carried out in the presence of a known molecular weight controlling agent such as hydrogen. In the copolymerization, the amount of other olefins to be copolymerized with the olefin is ordinarily up to 30% by weight, in particular, 0.3 to 15% by weight of the olefin. The polymerization of the styrene compound includes not only homopolymerization but also copolymerization (random polymerization or block polymerization) with other olefins. The polymerization reaction using the catalyst system of the present invention can be carried out continuously or batchwise under ordinary conditions and in one stage or two or more stages.

The present invention will now be illustrated by the following Examples. It is to be understood that the scope of the invention is not limited to these Examples.

### Example 1

300 ml of dried toluene was charged into a 1000 ml glass autoclave purged adequately with nitrogen gas and heated to 50°C, to which 2.5 x 10⁻⁵ moles of bis(acetylacetonato)zirconium dichloride and 25 milligram atoms (as aluminum metal) of methylaluminoxane were then added.

Ethylene gas was fed to the system to maintain the inner pressure at 1 atm and the ethylene was polymerized with agitation for 1 hour. The polymerization activity of the catalyst (CE) was 1510 g/g · Zr · atm · hour. The number average molecular weight of the resulting polymer was 1.54 x 10⁴. The ratio of the weight average molecular weight and number average molecular weight was 14.6.

### Comparative Example 1

Example 1 was repeated except using bis(acetylacetonato)titanium dichloride instead of the bis(acetylacetonato)zirconium dichloride to effect the polymerization of ethylene. CE was 380 g/g · Ti · atm · hour. The resulting polymer had a viscosity average molecular weight of 2.4 x 10⁶.

### Comparative Example 2

Comparative Example 1 was repeated except using 5 milligram atoms (as aluminum metal) of methylaluminoxane to effect the polymerization of ethylene. CE was 590 g/g · Ti · atm · hour.

### Comparative Example 3

Comparative Example 2 was repeated except using bis(2-methyl- 1,3-butanedionato)titanium dichloride instead of the bis(acetylacetonato)titanium dichloride to effect the polymerization of ethylene. CE was 1170 g/g · Ti · atm · hour.

### Example 2

A solution of 0.2 g of bis(acetylacetonato)zirconium dichloride in toluene was added to a slurry of 3.0 g of alumina calcined at 500°C for 6 hours in toluene and stirred at 70°C for 2 hours. The solid was separated, adequately washed with toluene and n-hexane and further dried to obtain a zirconium content of 9.1 mg in 1 g of the solid.

Polymerization of ethylene was carried out in an analogous manner to Comparative Example 2 except using the solid obtained as above instead of the bis(acetylacetonato)- titanium dichloride. CE was 2600 g/g · Zr · atm · hour.

### Comparative Example 4

Polymerization of ethylene was carried out in an analogous manner to Example 1 except using tetra(acetylacetonato)zirconium instead of the bis(acetylacetonato)zirconium dichloride, but no ethylene was polymerized.

### Comparative Example 5

0.2 millimole of bis(acetylacetonato)titanium dichloride, 10 milligram atoms (as aluminum metal) of methylaluminoxane and 250 ml of toluene were charged in a 100 ml glass autoclave purged sufficiently with nitrogen gas, to which 100 g of p-methylstyrene was then added, and the p-methylstyrene was polymerized at 50°C for 2 hours with agitation. CE was 760 g/g · Ti · atm · hour.

### Comparative Example 6

0.2 millimole of bis(2-methyl-1,3-butanedionato)titanium dichloride, 10 millgram atoms (as aluminum metal) of methylaluminoxane and 250 ml of toluene were charged to a 1000 ml glass autoclave purged sufficiently with nitrogen gas, to which 50 g of styrene was then added, and the styrene was polymerized at 50°C for 2 hours with agitation. CE was 518 g/g · Ti · atm · hour.

### Example 3

0.1 millimole of bis(acetylacetonato)zirconium dichloride and 10 milligram atoms (as aluminum metal) of methylaluminoxane were charged in a 500 ml flask purged sufficiently with nitrogen gas, to which 200 g of p-methylstyrene was then added, and the p-methylstyrene was polymerized at 50°C for 2 hours with agitation. CE was 854 g/g · Zr · atm · hour.

### Comparative Example 7

Polymerization of p-methylstyrene was carried out in an analogous manner to Comparative Example 2 except using tetra(acetylacetonato)zirconium instead of the bis(acetylacetonato)zirconium dichloride, but no p-methylstyrene was polymerized.

As exemplified above, the catalyst of the present invention has excellent properties as a polymerization catalyst in the polymerization of olefins, in particular, ethylene and styrene compounds.

## Claims

1. A catalyst for the polymerization of olefins comprises:
(a) a transition metal compound represented by the general formula, 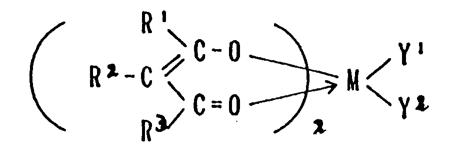 wherein M represents zirconium, Y¹ and Y² are the same or different, and each represents a halogen atom or an alkyl group containing from 1 to 10 carbon atoms, and R¹, R² and R³ each represent a hydrogen atom or a hydrocarbon group containing from 1 to 10 carbon atoms, at least one of which is a hydrogen atom but not all of which are hydrogen atoms; and
(b) an organoaluminum compound, which is an aluminoxane compound.

2. A catalyst as claimed in claim 1 wherein Y¹ and/or Y² is a chlorine atom.

3. A catalyst as claimed in claim 1 or claim 2 wherein Y¹ or Y² are both halogen atoms.

4. A catalyst as claimed in any one of the preceding claims wherein R¹, R² and/or R³ are alkyl groups.

5. A catalyst as claimed in any one of the preceding claims wherein the transition metal compound is selected from bis(2-methyl-1,3-butanedionato)zirconium dichloride; bis(acetylacetonato)zirconium dichloride; and bis(1,3-butanedionato)zirconium dichloride.

6. A catalyst as claimed in any one of the preceding claims wherein the transition metal compound is physically combined with one or more oxides of elements of Group II to Group IV of the periodic Table.

7. A process for the polymerization of olefins, including styrene compounds, when performed using a catalyst as claimed in any one of the preceding claims.

## Patentansprüche

1. Katalysator für die Olefinpolymerisation, enthaltend
a) eine Übergangsmetallverbindung, ausgedrückt durch die folgende allgemeine Formel 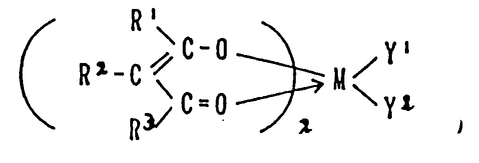 in der M Zirconium bedeutet, Y¹ und Y² gleich oder verschieden sind und jeweils ein Halogenatom oder eine Alkylgruppe mit 1 bis 10 Kohlensstoffatomen darstellen, und R¹, R² und R³ jeweils ein Wasserstoffatom oder eine Kohlenwasserstoffgruppe mit 1 bis 10 Kohlenstoffatomen bedeuten, wobei mindestens eines, aber nicht alle ein Wasserstoffatom sind, und
b) eine organischen Aluminiumverbindung, bei der es sich um eine Aluminoxanverbindung handelt.

2. Katalysator nach Anspruch 1, in dem Y¹ und/oder Y² ein Chloratom ist bzw. sind.

3. Katalysator nach Anspruch 1 oder 2, in dem Y¹ und Y² beide Halogenatome sind.

4. Katalysator nach einem der vorstehenden Ansprüche, in dem R¹, R² und/oder R³ Alkylgruppen sind.

5. Katalysator nach einem der vorstehenden Ansprüche, in dem die Übergangsmetallverbindung aus Bis(2-methyl-1,3-butandionato)zirconiumdichlorid, Bis(actylacetonato)zirconiumdichlorid und Bis(1,3-butandionato)zirconiumdichlorid ausgewählt ist.

6. Katalysator nach einem der vorstehenden Ansprüche, in dem die Übergangsmetallverbindung physikalisch mit einem oder mehreren Oxiden der Elemente der Gruppe II bis Gruppe IV des Periodensystems kombiniert wird.

7. Verfahren zur Polymerisation von Olefinen einschließlich Styrolverbindungen unter Verwendung eines Katalysators nach einem der vorstehenden Ansprüche.

## Revendications

1. Catalyseur pour la polymérisation d'oléfines, comprenant :
(a) un composé de métal de transition représenté par la formule générale : 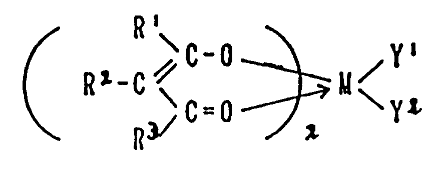 dans laquelle M représente le zirconium, Y¹ et Y² sont identiques ou différents et représentent chacun un atome d'halogène ou un groupe alkyle contenant de 1 à 10 atomes de carbone, et R¹, R² et R³ représentent chacun un atome d'hydrogène ou un groupe hydrocarboné contenant de 1 à 10 atomes de carbone, au moins l'un d'entre eux étant un atome d'hydrogène, mais tous ne signifiant pas un atome d'hydrogène, et
(b) un composé organoaluminium qui est un composé aluminoxane.

2. Catalyseur tel que revendiqué dans la revendication 1, dans lequel Y¹ et/ou Y² est/sont un atome de chlore.

3. Catalyseur tel que revendiqué dans la revendication 1 ou la revendication 2, dans lequel Y¹ et Y² sont tous les deux des atomes d'halogène.

4. Catalyseur tel que revendiqué dans l'une quelconque des revendications précédentes, dans lequel R¹, R² et/ou R³ sont des groupes alkyles.

5. Catalyseur tel que revendiqué dans l'une quelconque des revendications précédentes, dans lequel le composé de métal de transition est choisi parmi le dichlorure de bis(2-méthyl-1,3-butanedionato)zirconium, le dichlorure de bis(acétylacétonato)zirconium et le dichlorure de bis(1,3-butanedionato)zirconium.

6. Catalyseur tel que revendiqué dans l'une quelconque des revendications précédentes, dans lequel le composé de métal de transition est combiné physiquement avec un ou plusieurs oxydes des éléments des groupes II à IV du tableau périodique.

7. Procédé de polymérisation d'oléfines, comprenant les composés styréniques, qu'on effectue en utilisant un catalyseur tel que revendiqué dans l'une quelconque des revendications précédentes.
